# EUROPEAN PATENT APPLICATION

(11) **EP 1 657 920 A2**
(43) Date of publication of application: **17.05.2006**
(21) Application number: 05110546.8
(22) Date of filing: 09.11.2005
(51) Int. Cl.: H04N 5/445

(54) **Data-driven media guide**

(30) Priority: 15.11.2004 US 989741
(71) Applicant: MICROSOFT CORPORATION, Redmond, Washington 98052-6399 (US)
(72) Inventor: de Heer, David, Redmond, Washington 98052 (US); Sloo, David Hendler, Redmond, Washington 98052 (US); Cleron, Michael, Redmond, Washington 98052 (US); Barrett, Peter T., Redmond, Washington 98052 (US)
(74) Representative: Grünecker, Kinkeldey, Stockmair & Schwanhäusser Anwaltssozietät

(57) **Abstract**

An electronic program guide system receives data that identifies various types of available media content. A data-driven media guide is then generated to display visual representations of the available media content. The media guide is dynamically generated based on attributes associated with the various types of available media content.

## Description

### TECHNICAL FIELD

This invention relates to a media entertainment system and, in particular, to displaying program data using a data-driven media guide.

### BACKGROUND

Many media entertainment systems provide electronic program guides (EPGs) that display information describing programs that are scheduled for broadcast. Typical existing EPGs display program titles in a grid that associates each program title with a broadcast channel and a broadcast time. Each program is represented by a cell in the grid and the size of each cell indicates the duration of the program.

Technological advances have led to greater availability of on-demand media content. Because on-demand media content does not have a specified start time (i.e., it is available on-demand at any given time), it can be difficult to represent on-demand media content using an EPG grid that displays programs arranged according to broadcast time. Furthermore, many client devices are capable of playing different types of media content, including, for example, broadcast television program, video-on-demand, DVDs, digital picture slideshows, or music (CDs or previously recorded digital music files).

Electronic program guides have typically been limited to displaying program data associated with broadcast television programs, pay-per-view programs, and, more recently, available on-demand programs. As a media type becomes available that can be supported by a media entertainment system client device, in order for an Media guide application to display program data associated with the new media type, the program data must fit a pre-defined format, which may not accurately apply to the new media type. Alternatively, the Media guide application may be modified to be able to display program data associated with the new media type. Accordingly, a need exists for a data-driven media guide.

### SUMMARY

Techniques for generating and displaying a data-driven media guide that represents various types of available media content are described. Object-oriented data structures are used to define the channels on which media can appear, and the specific media assets themselves. These structures are used to dynamically generate a display of representations of the channels and the media items they contain. The data-driven media guide may also support different display formats, such as a time and channel based grid, a columnar display arranged by channel, a channel bar display, and so on.

### BRIEF DESCRIPTION OF THE DRAWINGS

The same numbers are used throughout the drawings to reference like features and components.

Figure 1 is a screen display of an exemplary data-driven time-based grid media guide.

Figure 2 is a screen display of an exemplary data-driven channel-based media guide.

Figure 3 is a screen display of an exemplary data-driven browse bar media guide.

Figure 4 is a block diagram illustrating an exemplary hierarchical relationship between an IMediaChannel interface and various media channel classes.

Figure 5 is an exemplary IMediaChannel interface.

Figure 6 is a screen display of an exemplary time-based grid media guide that includes representations of various types of channels.

Figure 7 is a screen display of an exemplary browse bar media guide that is currently displaying data associated with a VodMediaChannel object.

Figure 8 is a block diagram illustrating an exemplary hierarchical relationship between an IMediaItem interface and various item classes.

Figure 9 is an exemplary IMediaItem interface.

Figure 10 is a screen display of an exemplary time-based grid media guide that includes representations of various types of media items.

Figure 11 is a screen display of an exemplary browse bar media guide that displays representations of media items associated with a particular channel.

Figure 12 is a pictorial diagram of an exemplary environment in which a data-driven media guide may be implemented.

Figure 13 is a block diagram illustrating select components of an exemplary client device that may be configured to generate a data-driven media guide.

Figure 14 is a block diagram illustrating select components of a media guide application as shown in Figure 13.

Figure 15 is a flow diagram of an exemplary method for generating a data-driven media guide.

Figure 16 is a flow diagram of an exemplary method for responding to selection of a particular media item within a data-driven media guide.

### DETAILED DESCRIPTION

The following discussion is directed to a dynamic, data-driven media guide. Metadata associated with available media content is maintained according to an object-oriented data structure that includes, for example, media channel objects and media item objects. Any type of channel over which media content is available can be represented as a media channel object. Similarly, any type of media content can be represented as a media item object. Media channel objects of various types (e.g., broadcast television channels, video-on-demand channels, etc.) have the same structure (e.g., are associated with a single interface), but may be displayed differently. Similarly, media item object of various types (e.g., broadcast television programs, videos-on-demand, games, etc.) have the same structure (e.g., are associated with a single interface), but may be displayed differently. A data-driven media guide is generated based on the media channel objects and media item objects such that metadata associated with different types of media content can be displayed. The data-driven media guide is dynamic in that it is configured to generate one or more displays of the metadata based on the media channel and media item interfaces. When a new type of media channel and/or new type of media item is defined according to the appropriate interface, that media channel or media item will then be automatically supported by the data-driven media guide. For example, the media guide may be configured to display media items associated with live broadcast television programs and video-on-demand programs. Later, a media item may be defined to be associated with previously recorded programs. Because the media item for previously recorded programs is defined based on the same interface that was used to define the media items for broadcast television programs and video-on-demand programs, the media guide will automatically be able to also display metadata associated with the previously recorded programs. Software applications, games, digital images, and digital music are further examples of types of media for which metadata may be displayed using the same media guide.

### Media Guide Display

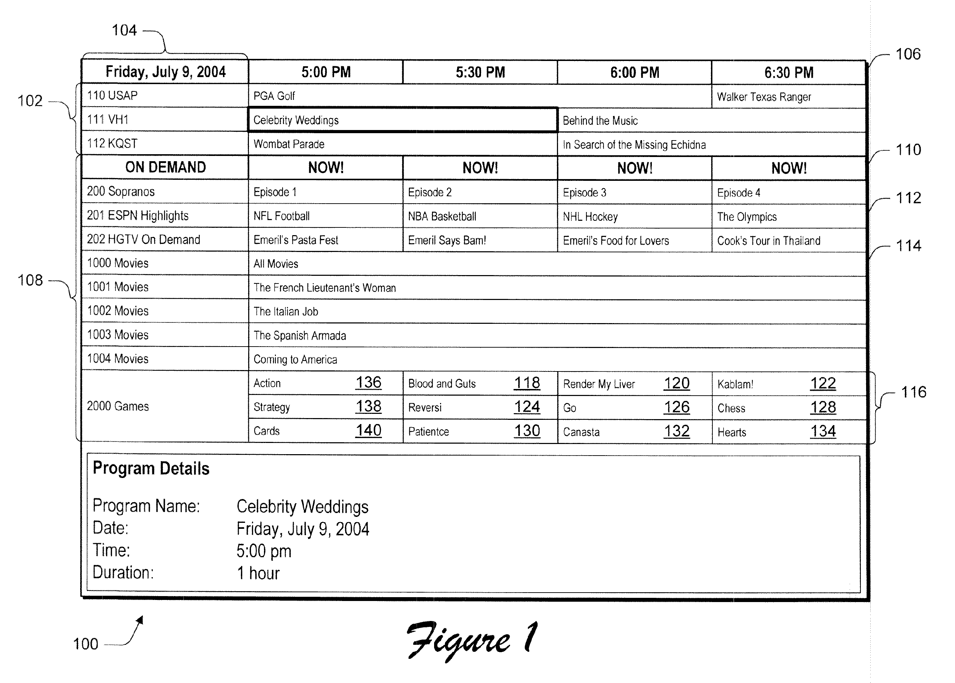

Figures 1-3 illustrate three example display formats that may be generated by a data-driven media guide. It is recognized that any number of formats may be designed to display metadata associated with media content, and the examples illustrated herein should not be construed as a limitation to the described data-driven media guide.

Figure 1 illustrates an exemplary screen display of a data-driven grid-based media guide. The media guide 100 illustrated in Figure 1 displays program data arranged by time and channel. Area 102 is used to display data identifying scheduled broadcast television programs. The left-most column 104 indicates the channel over which a particular program is scheduled for broadcast and the top row 106 indicates a scheduled broadcast time.

On-demand media content is represented in media guide 100 in area 108. Row 110 acts as a header for area 108, indicating that each of the represented programs is available now. On-demand media content can be represented in various ways. For example, row 112 represents a VOD channel over which ESPN highlights are available. In the illustrated example, each of the programs ("NFL Football", "NBA Basketball", "NHL Hockey", and "The Olympics") are available on-demand over a single channel (e.g., channel 201). In an exemplary implementation, channel 201 may represent a connection to an IP network and each of the available programs may be accessed via a different URL.

The "All Movies" program represented in row 114 as being available on channel 1000 may be, for example, a user interface through which a user can view a catalog of on-demand movies that are available for purchase.

The next four rows (associated with channels 1001 through 1004) each represent a typical on-demand channel over which one particular program is available. For example, on channel 1004, a viewer can watch an on-demand showing of the movie "Coming to America".

Entry 116 illustrates another way in which on-demand media content may be represented in data-driven media guide 100. Channel 2000 represents an on-demand channel over which multiple on-demand games may be accessed. For example, entries 118, 120, 122, 124, 126, 128, 130, 132, and 134 each represent a particular game that can be access on-demand via channel 2000. Entries 136, 138, and 140, on the other hand, represent categories of games that are available via channel 2000. For example, user selection of entry 140 may launch a user interface application through which the user can view all of the card games that are available via on-demand channel 2000.

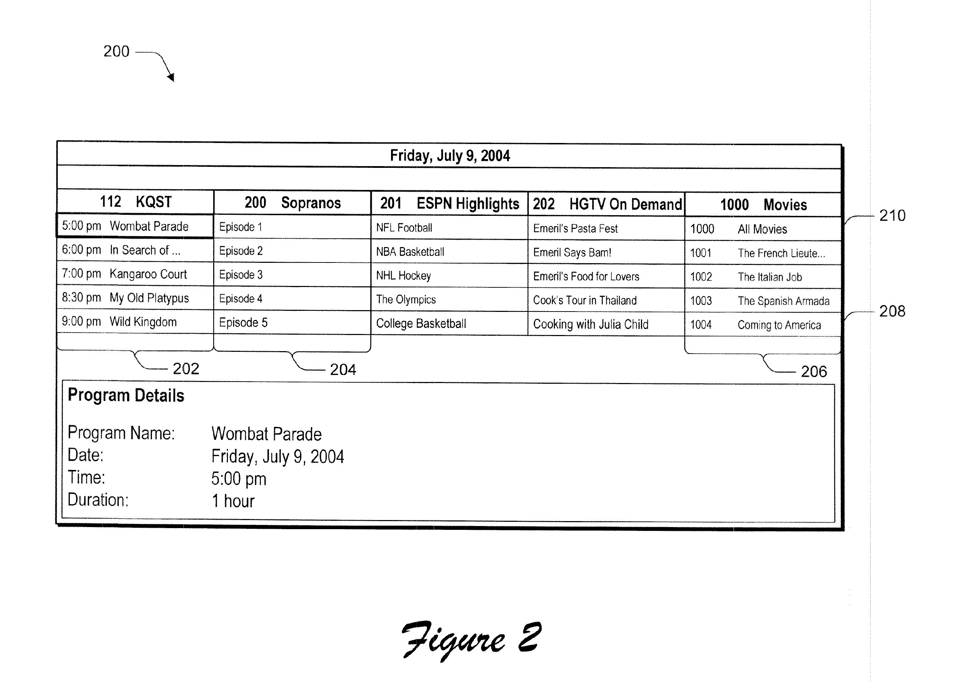

Figure 2 illustrates an exemplary screen display of a data-driven channel-based media guide. In screen display 200, each column represents a particular channel, a particular group of channels, or some other data-driven collection of media data. For example, column 202 represents broadcast television channel 112. Each entry in column 202 indicates a program name, and the scheduled broadcast time associated with the program.

Column 204 represents an on-demand channel over which several episodes of "The Sopranos" are available. Each entry in column 204 indicates a program title. There are no times specified in the entries of column 204 because each entry is available on-demand, at any time.

Column 206 represents a collection of on-demand channels over which on-demand movies (or related applications) are available. For example, when a user selects item 208, the client device tunes to channel 1004 and begins playing the on-demand movie "Coming to America". Item 210 represents a user interface through which a user can view a list of available on-demand movies. For example, when a user selects item 210, another application is launched that may retrieve a list of available on-demand movies from a server.

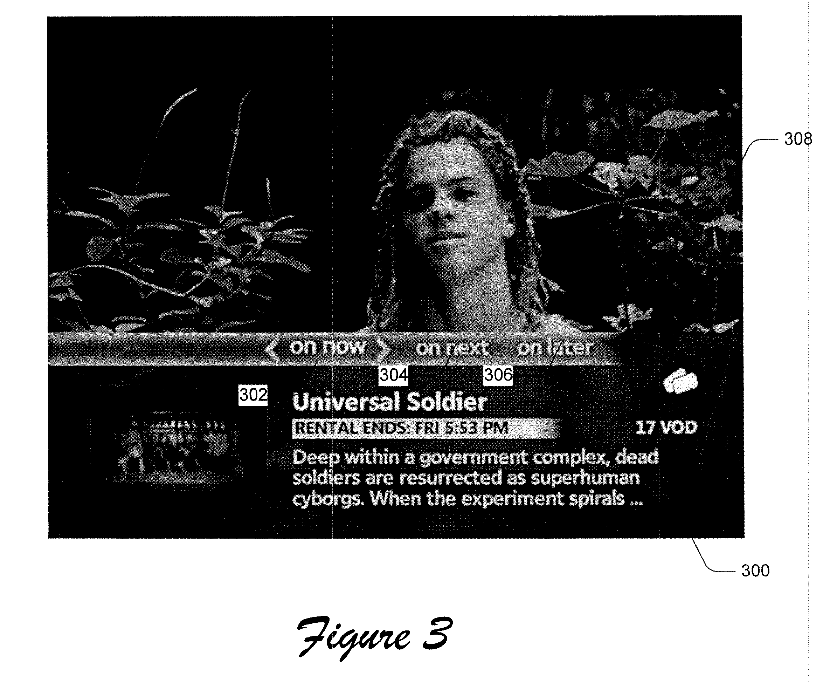

Figure 3 illustrates an exemplary screen display of a data-driven browse bar media guide. When a user requests more information (e.g., by pressing an "info" button, an up arrow button, or any other designated button on a remote control device), while watching a particular program, a browse bar media guide 300 is displayed at the bottom (or other designated area) of the screen. The browse bar media guide is configured to initially present more detailed information associated with the current program on the current channel, but also allows the viewer to navigate the guide to view more detailed information associated with other programs available on the same or different channels.

For example, in the illustrated example, a user can use left and right arrow buttons on a remote control to navigate between "on now" link 302, "on next" link 304, and "on later" link 306. When the "on now" link 302 is highlighted, the data that is displayed is associated with the program that is currently available on the selected channel. When the "on next" link 304 is highlighted, the data that is displayed is associated with the program that will be available on the selected channel after completion of the current program. Similarly, when then "on later" link 306 is highlighted, the data that is displayed is associated with the program that will be available after completion of the "on next" program. Depending on the type of channel that is currently selected, the "on now", "on next", and "on later" programs may be three different programs (e.g., on a broadcast television channel), may all be the same program (e.g., on a VOD channel), or may represent different types of media content (e.g., a program and an application).

In the described exemplary implementation, a user may navigate through channels in the browse bar media guide by pressing up or down arrow buttons on a remote control. For example, as illustrated in Figure 3, browse bar 300 is currently displaying data associated with channel 17. If a user presses a down arrow button, the selected channel may change to channel 16. The up and down arrow buttons are used to change the selected channel in the browse bar media guide without changing the channel to which the client device is tuned. In other words, the program that is being displayed 308 does not change when the user presses the up or down arrow buttons to change the selected channel in the media guide. Similarly, the program that is being displayed 308 does not change when the user presses the right or left arrow buttons to navigate between the "on now", "on next", and "on later" links.

In an exemplary implementation, multiple display formats of the media guide may be supported. For example, a grid-based guide as illustrated in Figure 1 may be generated when a user presses a guide button on a remote control. In the same system, a channel-based guide as illustrated in Figure 2 may be generated when a user selects one of the channel headings displayed in the grid-based guide. Similarly, a browse bar media guide as illustrated in Figure 3 may be generated when a user presses an info button on the remote control. As mentioned above, Figures 1-3 illustrate three examples of data-driven media guide display formats that may be implemented. However, these are merely examples and it is recognized that any number of display formats may be designed and implemented for displaying media content metadata according to the data-driven model described herein.

### Data Structure

In the described exemplary implementation, a media guide application is configured to generate a dynamic data-driven media guide based on an object oriented data structure. Metadata associated with the available media content is maintained according to the object oriented data structure.

In the described exemplary implementation, the data structure is defined in terms of an interface and classes that are based on the interface. Alternate implementations are recognized that may define the data structure in terms of a base class and subclasses. For example, the C# programming language supports interfaces, while the C++ programming language supports classes and subclasses. The described object oriented data structure may be implemented in any number of ways, using any type of programming language, and may or may not be designed to include, for example, interfaces.

### IMediaChannel Interface

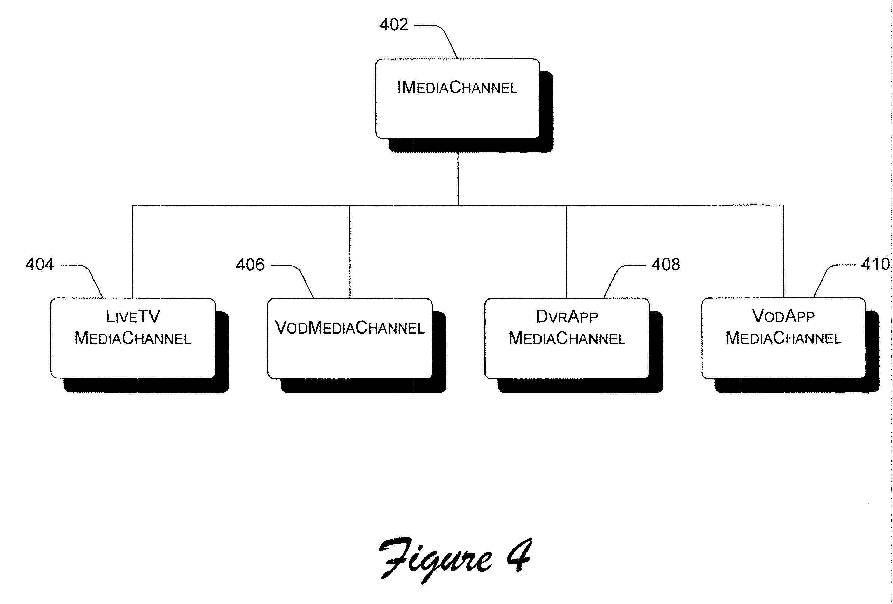

Figure 4 illustrates a hierarchical relationship between an IMediaChannel interface 402 and several media channel classes. In an exemplary implementation, the IMediaChannel interface 402 specifies several methods associated with displaying in a media guide data associated with a particular channel. LiveTVMediaChannel class 404, VodMediaChannel class 406, DvrAppMediaChannel class 408, and VodAppMediaChannel class 410 are examples of classes that may be defined to inherit the responsibility of implementing the methods defined in IMediaChannel interface 402.

LiveTVMediaChannel class 404 is used to determine how to display in a media guide, data associated with a channel over which broadcast television programs are received. For example, referring to Figure 1, the rows associated with channels 110, 111, and 112 may be generated based on LiveTVMediaChannel objects. Similarly, LiveTVMediaChannel obejcts may also be used to determine how to display metadata associated with the broadcast television channel in a columnar display as shown in Figure 2, in a browse bar display as shown in Figure 3, or in any other data-driven media guide display that is configured based on the IMediaChannel interface.

VodMediaChannel class 406 is used to determine how to display data associated with a channel over which a video-on-demand is available. For example, referring to Figure 1, the row associated with channel 1001 may be generated based on a VodMediaChannel object. Similarly, referring to Figure 2, the column associated with channel 200 Sopranos may be generated based on a VodMediaChannel object. Browse bar or other types of displays of metadata associated with a VOD channel may also be generated based on a VodMediaChannel object.

DvrAppMediaChannel class 408 is used to determine how to display in a media guide, data associated with a channel over which media content maintained by a digital video recorder may be available. A particular DvrAppMediaChannel object may be used to determine how data associated with the DVR channel is to be displayed in any number of display formats.

VodAppMediaChannel class 410 is used to determine how to display in a media guide, data associated with a channel over which one or more on-demand applications may be available. For example, referring to Figure 1, Movies channel 1000 may be generated based on a VodAppMediaChannel object. Similarly, the same VodAppMediaChannel object may be used to generate other data driven media guide display formats as well.

The specific media channel classes shown in Figure 4 are just a few examples of media channel classes that may be defined to inherit the responsibility of implementing the methods defined in IMediaChannel interface 402. Any number of other types of media channel classes may also be defined in a similar way. Examples may include, but are not limited to, a VodPackageMediaChannel class for representing a channel over which a package of related VOD media items are available, a SubscriptionVodMediaChannel class for representing a channel over which subscription VOD media items are available, and a SlideshowMediaChannel class for representing a channel over which one or more image slideshows may be available. Although specific examples are described herein, the IMediaChannel interface 402 is intended to be flexible, allowing for creation of specific media channel classes that represent any type of media channel that for which any type of visual representation in a media guide may be desired.

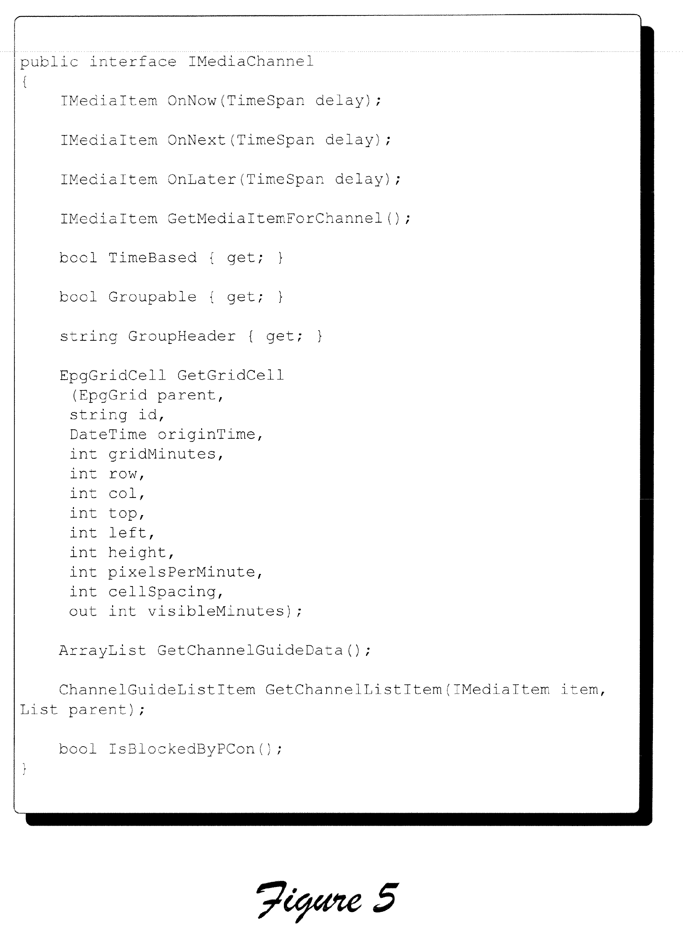

Figure 5 illustrates an exemplary IMediaChannel interface 402. Table 1 provides descriptions of the methods that are defined by IMediaChannel interface 402.

**Table 1**

| name | description |
|---|---|
| OnNow(TimeSpan delay) | Returns an identifier associated with a media item currently playing on this channel. |
| OnNext(TimeSpan delay) | Returns an identifier associated with a media item that will play next on this channel. |
| OnLater(TimeSpan delay) | Returns an identifier associated with a media item that will play after the OnNext media item. |
| GetMediaItemForChannel() | Returns an identifier associated with a media item that, when displayed in a grid, will be associated with the channel identifier. |
| TimeBased() | Returns a Boolean indicator as to whether or not the channel is time based (e.g., broadcast television is time based while on-demand media content is not time based). |
| Groupable() | Returns a Boolean indicator as to whether or not the channel can be grouped. For example, referring to Figure 2, each of the channels listed in column 206 are groupable, and have the same GroupHeader (see below). |
| GroupHeader() | Returns a string to be used as a header for the group. |
| GetGridCell(parent, ID, OriginTime, GridMinutes, Row, Col, Top, Left, Height, PixelsPerMinute, CellSpacing, VisibleMinutes) | Creates an EPG grid cell to represent a specified slot in the guide. |
| GetChannelGuideData() | Returns a list of objects to be associated with the channel when displayed in a columnar display. For example, referring to Figure 2, column 202 is generated by calling the GetChannelGuideData method associated with the MediaChannel object that represents channel 112. |
| GetChannelListItem() | Takes as input one item from the list generated by GetChannelGuideData, and generates a user interface element (e.g., a button, a grid cell, etc.) associated with that item. |
| IsBlockedByPCon() | Returns a Boolean indicator as to whether or not the channel should be blocked based on previously set parental controls. |

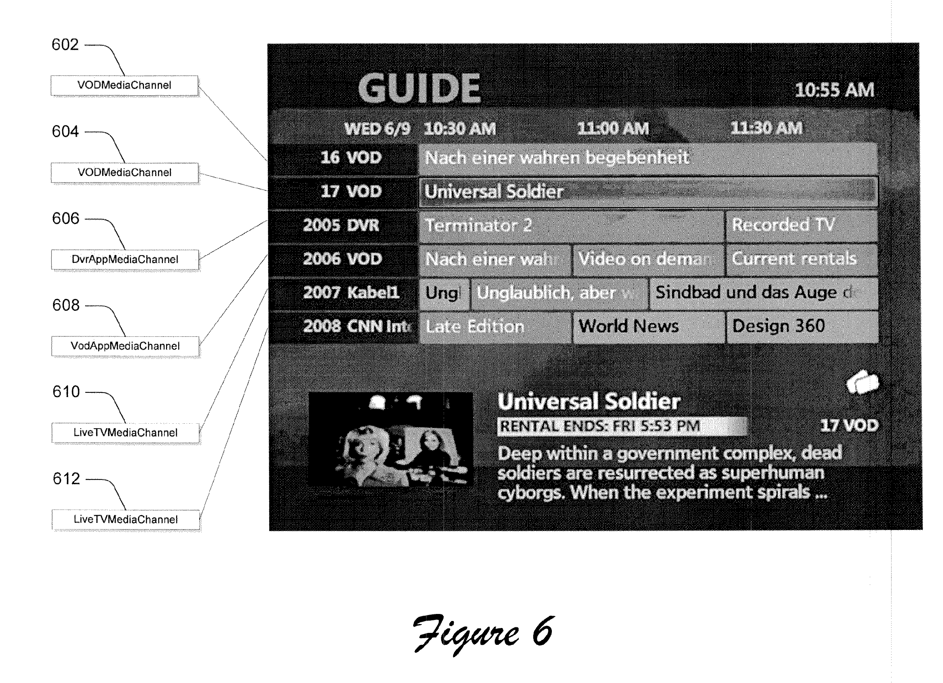

Figure 6 illustrates an exemplary grid-based media guide screen display in which several different channel types are displayed. Rows 602 and 604 are associated with channels over which a VOD program is available. Rows 602 and 604 are each displayed based on a VODMediaChannel object that was generated according to the VODMediaChannel class 406.

Row 606 is associated with a channel over which programs that have been previously recorded using a digital video recorder are available. Row 606 is displayed based on a DvrAppMediaChannel object that was generated according to the DvrAppMediaChannel class 408.

Row 608 is associated with a channel over which multiple on-demand media content is available. Row 608 is displayed based on a VodAppMediaChannel object that was generated according to the VodAppMediaChannel class 410.

Rows 610 and 612 are associated with channels over which broadcast television programs are available. Rows 610 and 612 are each displayed based on a LiveTVMediaChannel object that was generated according to the LiveTVMediaChannel class 404.

For example, a media guide application responsible for generating the media guide shown in Figure 6, determines times and channels that are to be represented on the display. In this example, the times range from 10:30 am to 12:00 pm, and the channels include channels 16, 17, 2005, 2006, 2007, and 2008. For each channel to be displayed, the media guide application calls the GetGridCell method associated with the MediaChannel object for the particular channel and for a particular time. For example, for channel 16, the media guide application calls the GetGridCell method associated with VodMediaChannel object 602, specifying 10:30 am as the OriginTime parameter. The GetGridCell method returns a UI object that corresponds to the grid cell that represents the program, "Nach einer wahren begebenheit". Because channel 16 is a VOD channel with only one available program, only one call to the GetGridCell method is needed. On the other hand, for channel 2008, which is represented by LiveTVMediaChannel object 612, three calls to the GetGridCell method are made to generate the UI objects associated with the programs "Late Edition", "World News", and "Design 360".

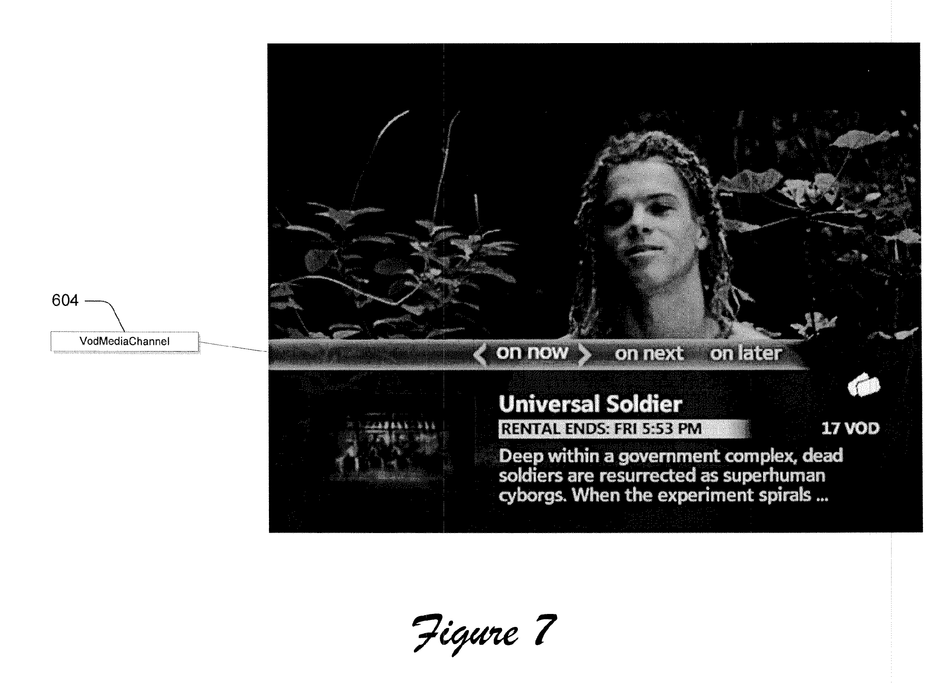

Figure 7 illustrates an exemplary screen display of a data-driven browse bar media guide that is displaying data associated with a particular media channel object. In the illustrated example, the currently selected channel in the media guide is channel 17, which is a VOD channel. Accordingly, VodMediaChannel object 604 is used to determine the behavior of the "on now", "on next", and "on later" links that are displayed at the top of the browse bar media guide. For example, if a user selects the "on now" link shown in Figure 7, the media guide application calls the OnNow method associated with VODMediaChannel object 604 to determine a program for which detailed information is to be displayed in the browse bar.

### IMediaItem Interface

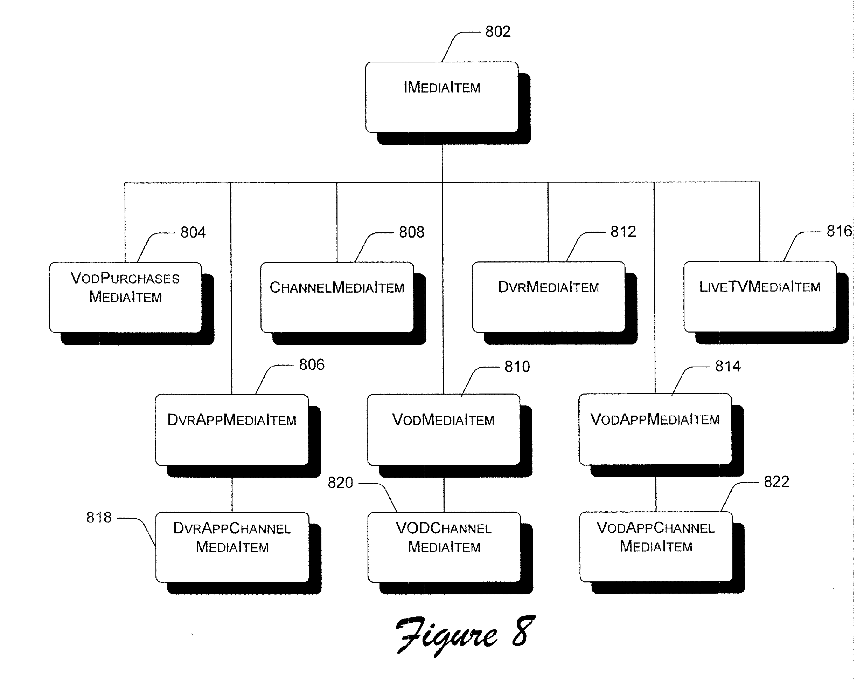

Figure 8 illustrates a hierarchical relationship between an IMediaItem interface 802 and several item classes. In an exemplary implementation, the IMediaItem interface 802 specifies several methods that define actions to be performed when a particular media item (e.g., television program, movie, VOD, application, etc.) is selected. VodPurchasesMediaItem class 804, DvrAppMediaItem class 806, ChannelMediaItem class 808, VodMediaItem class 810, DvrMediaItem class 812, VodAppMediaItem class 814, and LiveTVMedialtem class 816 are examples of classes that may be defined to inherit the responsibility of implementing the methods defined in IMediaItem interface 802.

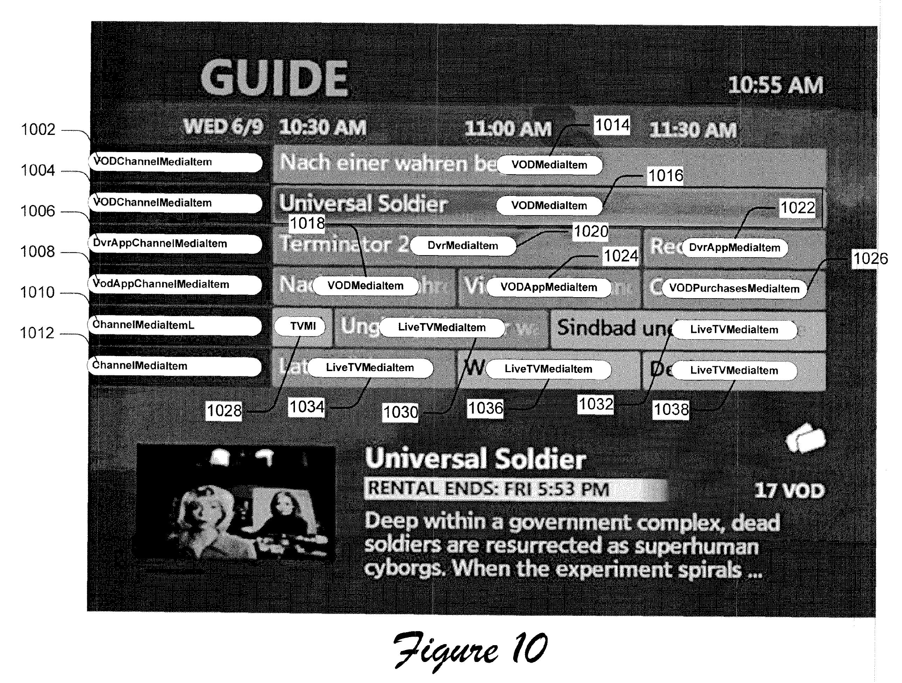

The IMediaItem interface 802 enables a media guide application to generate an interactive media guide without having to be specifically programmed to handle each type of media item that will be represented. For example, a media guide application that generates the media guide shown in Figure 10 will treat each of the displayed cells the same way. That is, when a cell is highlighted, the media guide application will call the ShowRolloverInfo method associated with the cell; when a cell is selected, the media guide application will call the Open method associated with the cell; and so on. The actions that are performed based on the Open method that is called or the data that is displayed when the ShowRolloverInfo method is called may differ significantly depending on what type of MediaItem object is associated with the selected cell, but from the perspective of the media guide application, each of the cells is the same in that each cell represents a MediaItem object that is based on the IMediaItem interface.

This enables the media guide application to support any type of media item that may be developed so long as a MediaItem object that adheres to the IMediaItem interface can be generated to represent the media item. The example media item classes shown in Figure 8 and described below are merely examples, and are not intended to limit the scope of the IMediaItem interface 802. It is recognized that any number of specific MediaItem classes may be defined based on the IMediaItem interface 802 to enable the media guide application to present an interactive media guide that includes representations of any types of media items.

VodPurchasesMediaItem class 804 is used to determine actions to be performed upon selection of a representation of an application through which previously purchased on-demand media content may be accessed. For example, a page that displays a list of on-demand assets that have been purchased and are currently available to the user may be launched when a viewer selects a representation of a VodPurchasesMediaItem object.

DvrAppMedialtem class 806 is used to determine actions to be performed upon selection of a representation of a DVR application. For example, a page that displays a list of existing and/or scheduled DVR recordings may be launched when a viewer selects a representation of a DvrAppMediaItem object.

DvrAppChannelMediaItem class 818 is a subclass of DvrAppMediaItem class 806. DvrAppChannelMediaItem class 818 is used to determine media guide behavior when a user selects a channel heading for a channel associated with a DvrAppMediaItem. For example, if a media guide application is currently displaying a grid-based media guide (e.g., as shown in Figure 1), viewer selection of a row heading that corresponds to a DvrAppChannelMediaItem object may cause the media guide application to generate a channel-based media guide (e.g., as shown in Figure 2) with the selected channel highlighted in the generated channel-based media guide.

ChannelMediaItem class 808 is used to determine media guide behavior when a user selects a particular channel heading. For example, if a media guide application is currently displaying a grid-based media guide (e.g., as shown in Figure 1), viewer selection of a row heading that corresponds to a ChannelMediaItem object may cause the media guide application to generate a channel-based media guide (e.g., as shown in Figure 2) with the selected channel highlighted in the generated channel-based media guide.

VodMediaItem class 810 is used to determine actions to be performed upon selection of a representation of a particular video-on-demand. For example, referring to Figure 1, selection of the cell that represents the movie "Coming to America" on channel 604 (a representation of a VodMediaItem object) may cause the movie "Coming to America" to begin playing.

DvrMediaItem class 812 is used to determine actions to be performed upon selection of a representation of a media item that is managed by a DVR (e.g., a previously recorded media item or a media item that is scheduled to be recorded). For example, selection of a cell that represents a previously recorded program may cause the recording of the program to begin playing.

VodAppMediaItem class 814 is used to determine actions to be performed upon selection of a representation of a VOD application. For example, a page that displays a list of VODs that are available for purchase may be launched when a viewer selects a representation of a VODAppMediaItem object.

VodAppChannelMediaItem class 822 is a subclass of VodAppMediaItem class 818. VodAppChannelMediaItem class 824 is used to determine media guide behavior when a user selects a channel heading for a channel associated with a VodAppMediaItem. For example, if a media guide application is currently displaying a grid-based media guide (e.g., as shown in Figure 1), viewer selection of a row heading that corresponds to a VodAppChannelMediaItem object may cause the media guide application to generate a channel-based media guide (e.g., as shown in Figure 2) with the selected channel highlighted in the generated channel-based media guide.

LiveTVMediaItem class 816 is used to determine actions to be performed upon selection of a representation of a broadcast television program. For example, referring to Figure 1, selection of the cell that represents the program "Celebrity Weddings" on channel 111 may cause the client device to tune to channel 111 and begin showing the selected program.

The specific media item classes shown in Figure 8 are just a few examples of media item classes that may be defined to inherit the responsibility of implementing the methods defined in IMediaItem interface 802. Any number of other types of media item classes may also be defined in a similar way. Examples may include, but are not limited to, a PhotoMediaItem class for defining actions to be performed upon selection of a representation of an image, a MusicMediaItem class for defining actions to be performed upon selection of a representation of a song, and so on. Although specific examples are described herein, the IMediaItem interface 802 is intended to be flexible, allowing for creation of specific media item classes that define actions to be performed upon selection of a representation any type of media content.

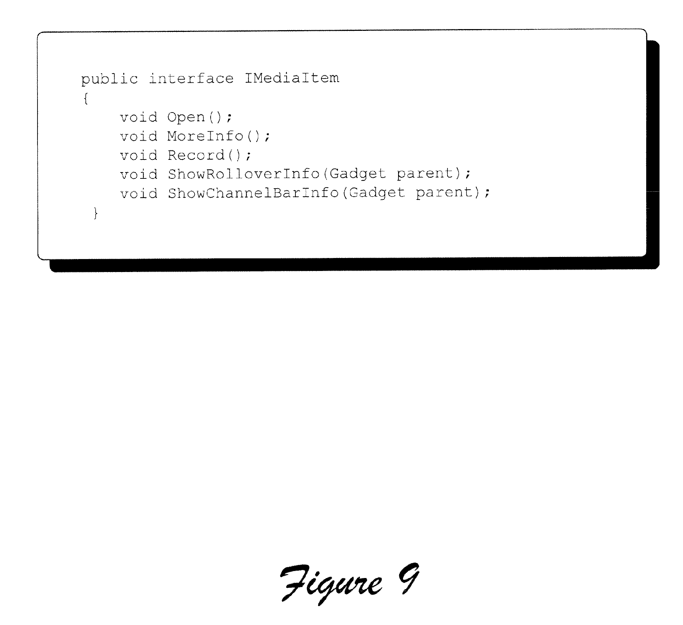

Figure 9 illustrates an exemplary IMediaItem interface 802. Table 2 provides descriptions of the methods that are defined by IMediaItem interface 802.

**Table 2**

| Name | description |
|---|---|
| Open() | Actions to be performed when a user presses an "OK" button on a remote control while a media item object is highlighted. |
| MoreInfo() | Actions to be performed when a user presses an "INFO" button on a remote control while a media item object is highlighted. |
| Record() | Actions to be performed when a user presses a "Record" button on a remote control while a media item object is highlighted. |
| ShowRolloverInfo() | Sets the rollover information display in the rollover area of the screen when a media item object is highlighted. |
| ShowChannelBarInfo() | Sets the information display on the channel bar when the channel is changed so that that the media item is currently playing. |

Figure 10 illustrates an exemplary grid-based media guide screen display in which several different types of media items are represented. VODChannelMediaItem object 1002 and VODChannelMediaItem object 1004 are representations of particular VOD channels (i.e., channel 16 and channel 17, respectively, as shown in Figure 6). Methods associated with the VODChannelMediaItem objects are called depending on how the object is selected. For example, if the grid associated with VODChannelMediaItem object 1002 is highlighted, then the ShowRolloverInfo method associated with VODChannelMediaItemobject 1002 is called. Similarly, if a viewer presses an "OK" button on a remote control while the grid associated with VODChannelMediaItem object 1002 is highlighted, then the Open method associated with VODChannelMediaItemobject 1002 is called.

DvrAppChannelMediaItem object 1006 is a representation of a channel via which media content that is managed by a DVR is available.

VodAppChannelMediaItem object 1008 is a representation of a channel via which a VOD application may be accessed.

ChannelMediaItem object 1010 and ChannelMediaItem object 1012 are representations of broadcast television channels.

VODMedialtem object 1014, VODMediaItem object 1016, and VODMedialtem object 1018 each represent a particular VOD program.

DvrMediaItem object 1020 is a representation of a particular program that is available after having been recorded using a digital video recorder.

DvrAppMediaItem object 1022 is a representation of an application that is available through which, for example, a user can view a list of available programs that have been previously recorded using the digital video recorder.

VODAppMediaItem object 1024 is a representation of an application through which, for example, a user can view on-demand media content that is available for purchase.

VODPurchasesMediaItem 1026 is a representation of an application through which, for example, a user can view on-demand media content that has already been purchased and is available for viewing.

LiveTVMediaItem objects 1028, 1030, 1032, 1034, 1036, and 1038 are representations of television programs that are scheduled for broadcast.

As illustrated by Figure 10, the data-driven media guide application described herein, can be used to generate display representations of several different media types in a single media guide. Furthermore, the there are no restrictions on the type of media content that can be represented in association with a particular channel. Rather, Figure 10 illustrates an example of how different types of media items may be represented in association with a single channel. As described above with reference to Figures 4-8, a MediaChannel object's GetGridCell method is used to generate the grid cells that are associated with a particular channel.

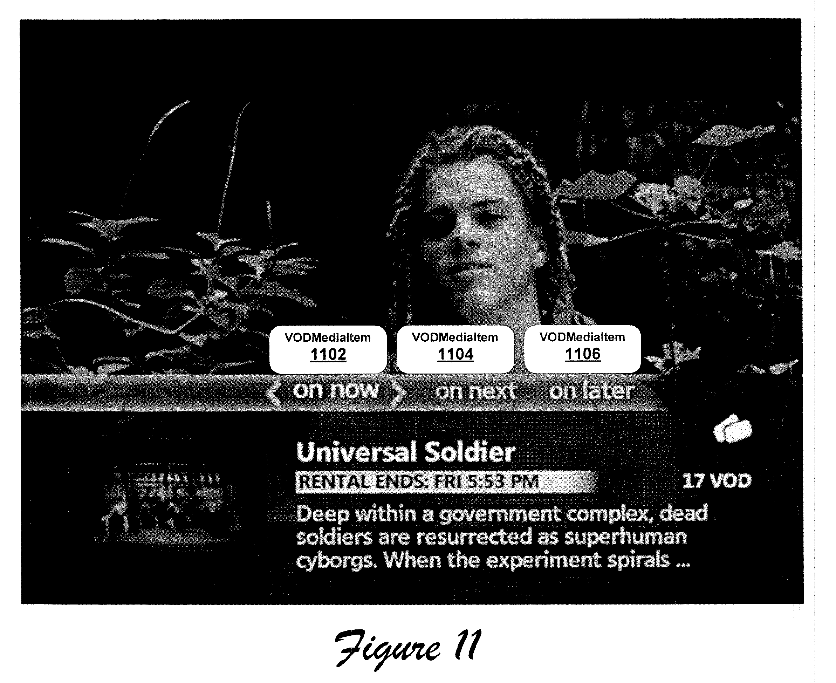

Figure 11 illustrates an exemplary display of a data-driven browse bar media guide. When a user requests more information (e.g., by pressing an "info" button, or other designated button, on a remote control device), while watching a particular program, a browse bar media guide is displayed at the bottom of the screen, initially populated such that the program that is currently being viewed is selected in the media guide. VODMediaItem object 1102 represents the program that is currently available on the channel that is currently selected in the media guide. Similarly, VODMediaItem object 1104 represents the program that will be available on the selected channel after completion of the program that is currently playing, and VODMediaItem object 1106 represents the program that will be available after completion of the "on next" program. In the illustrated example, because the current channel is a VOD channel, with only one available VOD program, VODMediaItem 1102, VODMediaItem 1104, and VODMediaItem 1106 all represent the same VOD program.

In the described exemplary implementation, a viewer can navigate the browse bar media guide using arrow buttons on the remote control. For example, left and right arrow buttons can be used to navigate among the selectable "on now", "on next", and "on later" links. Similarly, up and down buttons can be used to navigate from one channel to another.

### Exemplary Environment

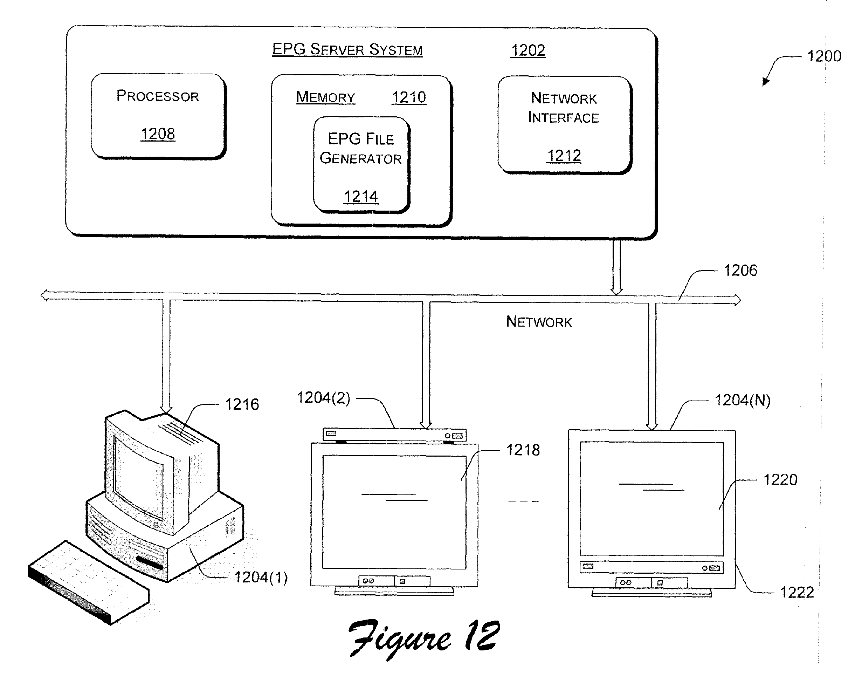

Figure 12 illustrates an exemplary environment 1200 that supports a data-driven media guide as described herein. Exemplary environment 1200 includes an EPG server system 1202 and multiple client devices 1204(1), 1204(2), ..., 1204(N) coupled to the EPG server system 1202 via a network 1206.

EPG server system 1202 includes a processor 1208, a memory 1210, and a network interface 1212. EPG file generator 1214 is stored in memory 1210 and executed on processor 1208. EPG file generator 1214 receives, for example, from a third party provider (not shown), program data that includes attributes associated with available programs. The available programs may include, for example, scheduled broadcast television programs, available on-demand programs, available on-demand applications (e.g., on-demand games), and so on. In the described exemplary implementation, data may be received for programs associated with traditional broadcast channels (which are tuned by frequency), with IPTV broadcast channels (which are tuned by URL), and/or with any other types of channels over which media content may be transmitted.

EPG file generator 1214 formats the received program data, generating an EPG file. In the described exemplary implementation, the generated EPG file includes data that indicates a type associated with each channel. Example types may include, but are not limited to, LiveTV, VOD, DVR, and so on.

After generating the EPG file, EPG file generator 1214 publishes the file, causing the EPG file to be transmitted via network interface 1212 over network 1206 to client devices 1204. As described above, network 1206 may be implemented as any type of network capable of transmitting media content.

Client devices 1204 can be implemented in any number of ways. For example, a client device 1204(1) is implemented as a personal computer. Personal computer 1204(1) is coupled to a monitor 1216 for presenting the EPG data received by the client device. Client device 1204(2) is also coupled to receive EPG data over network 1206 and render the received data using associated television 1218. Client device 1204(N) is an example of a combination television 1220 and integrated set-top box 1222. In this example, the various components and functionality of the set-top box are incorporated into the television, rather than using two separate devices.

Each client device 1204 runs a media guide application that utilizes the EPG file received from EPG server system 1202 to generate a data-driven media guide described above with reference to Figures 1-11.

### Exemplary Client Device

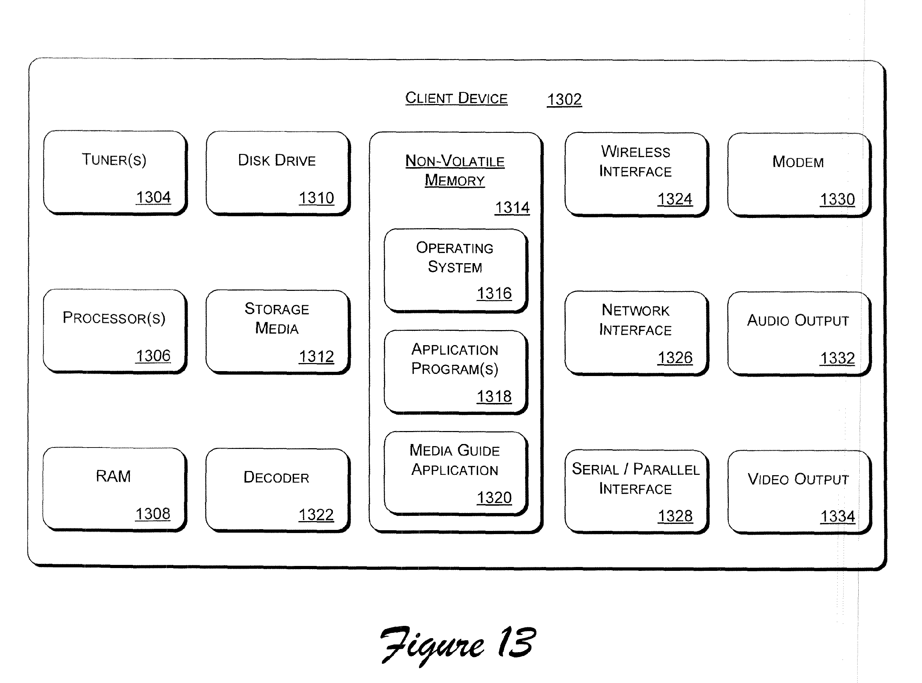

Figure 13 illustrates selected components of a client device 1302 that is configured to generate a data-driven media guide. Client device 1302 includes one or more tuners 1304. Tuners 1304 are representative of one or more tuners (e.g., in-band tuners) that tune to various broadcast or on-demand channels to receive media content. Tuners 1304 are also representative of a tuner (e.g., an out-of-band tuner) that tunes to a channel over which an EPG file may be received from EPG server system 1202. Alternatively, tuners 1304 may represent an application and/or network connection that enables client device 1302 to receive data over another type of network over which media content can be transmitted, such as an IP based network.

Client device 1302 also includes one or more processors 1306 and one or more memory components. Examples of possible memory components include a random access memory (RAM) 1308, a disk drive 1310, a mass storage component 1312, and a non-volatile memory 1314 (e.g., ROM, Flash, EPROM, EEPROM, etc.). Alternative implementations of client device 1302 can include a range of processing and memory capabilities, and may include more or fewer types of memory components than those illustrated in Figure 13. For example, full-resource clients can be implemented with substantial memory and processing resources, including the disk drive 1310 to store content for replay by the viewer (e.g., a client device that includes a digital video recorder).

Processor(s) 1306 process various instructions to control the operation of client device 1302 and to communicate with other electronic and computing devices. The memory components (e.g., RAM 1308, disk drive 1310, storage media 1312, and non-volatile memory 1314) store various information and/or data such as media content, EPG data, configuration information for client device 1302, and/or graphical user interface information.

An operating system 1316 and one or more application programs 1318 may be stored in non-volatile memory 1314 and executed on processor 1306 to provide a runtime environment. A runtime environment facilitates extensibility of client device 1302 by allowing various interfaces to be defined that, in turn, allow application programs 1318 to interact with client device 1302. In the illustrated example, a media guide application 1320 is stored in memory 1314 to operate on a received EPG file to generate a data-driven media guide. The application programs 1318 that may be implemented at client device 1302 may include, for example, a browser to browse the Web, an email program to facilitate electronic mail, and so on. Client device 1302 can also include other components pertaining to a television entertainment system which are not illustrated in this example for simplicity purposes. For instance, client device 1302 can include a user interface application and user interface lights, buttons, controls, etc. to facilitate viewer interaction with the device.

In the described exemplary implementation, media guide application 1320 manages the data structure described above with reference to Figures 1-11. Media guide application 1320 receives data associated with media content available via a server from EPG server system 1202. Media guide application 1320 may also receive data associated with other available media content from other components of client device 1302. For example, if client device 1302 includes digital video recording capabilities, then data associated with program that have been recorded may also be made available to media guide application 1320. Furthermore, data associated with one or more application programs 1318 may also be made available to media guide application 1320. For example, in order for an application program associated with a digital video recorder to be available from within a media guide, data associated with the DVR application may be made available to media guide application 1320 so a DVR application item can be displayed as part of a data-driven media guide.

Client device 1302 also includes a decoder 1322 to decode a broadcast video signal, such as an NTSC, PAL, SECAM or other TV system video signal. Client device 1302 further includes a wireless interface 1324, a network interface 1326, a serial and/or parallel interface 1328, and a modem 1330. Wireless interface 1324 allows client device 1302 to receive input commands and other information from a user-operated input device, such as from a remote control device or from another IR, Bluetooth, or similar RF input device.

Network interface 1326 and serial and/or parallel interface 1328 allow client device 1302 to interact and communicate with other electronic and computing devices via various communication links (e.g., EPG server system 1202 via network 1206). Although not shown, client device 1302 may also include other types of data communication interfaces to communicate with other devices. Modem 1330 facilitates communication between client device 1302 and other electronic and computing devices via a conventional telephone line.

Client device 1302 also includes an audio output 1332 and a video output 1334 that provide signals to a television or other display device that processes and/or presents or otherwise renders broadcast or on-demand programs. Although shown separately, some of the components of client device 1302 may be implemented in an application specific integrated circuit (ASIC). Additionally, a system bus (not shown) typically connects the various components within client device 1302. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

General reference is made herein to one or more client devices, such as client device 1302. As used herein, "client device" means any electronic device having data communications, data storage capabilities, and/or functions to process signals, such as broadcast signals, received from any of a number of different sources. In one implementation, functionality of the client device may be distributed such that one device, for example a personal computer, renders the data-driven media guide and communicates with a set-top box that receives and processes broadcast signals.

### Media Guide Application

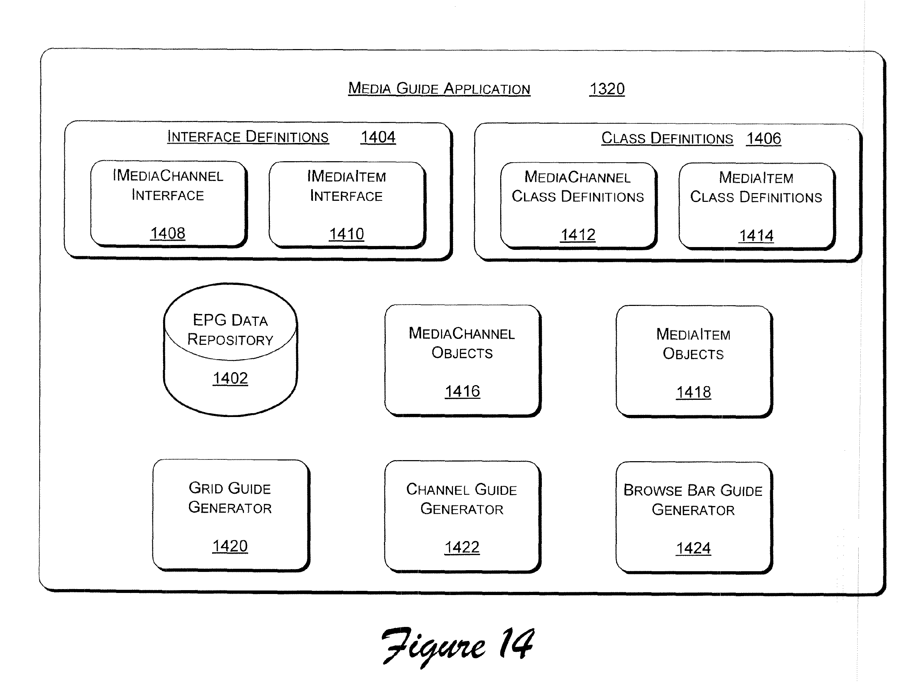

Figure 14 illustrates select components of media guide application 1320. Media guide application 1320 includes EPG data repository 1402, interface definitions 1404, and class definitions 1406.

EPG data repository 1402 is configured to maintain EPG data that is received from EPG server system 1202. Furthermore, EPG data repository 1402 may also be configured to maintain data that is specific to client device 1302 that may be used to generate a media guide. For example, data associated with a DVR, a personal collection of digital images, or a personal digital music collection may also be stored in EPG data repository 1402.

Interface definitions 1404 include, for example, an IMediaChannel interface 1408 and an IMediaItem interface 1410. IMediaChannel interface 1408 defines methods that may be used to determine how to display representations of a particular channel and one or more programs that are available via that channel. An example implementation of an IMediaChannel interface 1408 is shown in Figure 5. IMediaItem interface 1410 defines method that may be used to determine behavior of an interactive media guide when a representation of a particular media item is selected or otherwise interacted with. An example implementation of an IMediaItem interface 1410 is shown in Figure 9.

Class definitions 1406 include, for example, MediaChannel class definitions 1412 and MediaItem class definitions 1414. A particular MediaChannel class is defined for each type of channel that is to be represented via the media guide. Figure 4 illustrates four example MediaChannel classes. Similarly, a particular Medialtem class is defined for each type of media item that is to be represented via the media guide. Figure 8 illustrates several example MediaItem classes.

Media guide application 1320 also includes one or more MediaChannel objects 1416 and one or more MediaItem objects 1418. A MediaChannel object 1416 is an instantiation of a particular MediaChannel class, and represents a specific channel. For example, referring to Figure 6, VODMediaChannel 602 and VODMediaChannel 604 are two instantiations of a VODMediaChannel class, and each represents a single channel (i.e., channels 16 and 17, respectively).

Similarly, a Medialtem object 1418 is an instantiation of a particular MeidaItem class, and represents a specific media item. For example, referring to Figure 10, VODMediaItem 1014 is an instantiation of a VODMediaItem class, and represents a specific video-on-demand. Similarly, LiveTVMediaItem 1034 is an instantiation of a LiveTVMediaItem class, and represents a specific broadcast television program.

Media guide application 1320 also includes one or more media guide generators. In the illustrated example, media guide application 1320 includes grid guide generator 1420, channel guide generator 1422, and browse bar guide generator 1424. Grid guide generator 1420 is configured to generate an interactive grid-based guide, for example, as shown in Figures 1, 6, and 10. Channel guide generator 1422 is configured to generate an interactive channel-based guide, for example, as shown in Figure 2. Browse bar guide generator 1424 is configured to generate an interactive browse bar guide, for example, as shown in Figures 3, 7, and 11. In the described exemplary implementation, guide generators 1420, 1422, and 1424 generate the respective media guide displays based on the MediaChannel objects 1416, and provide interactive responses based on the MediaItem objects 1418.

### Generating a Data-Driven Media Guide

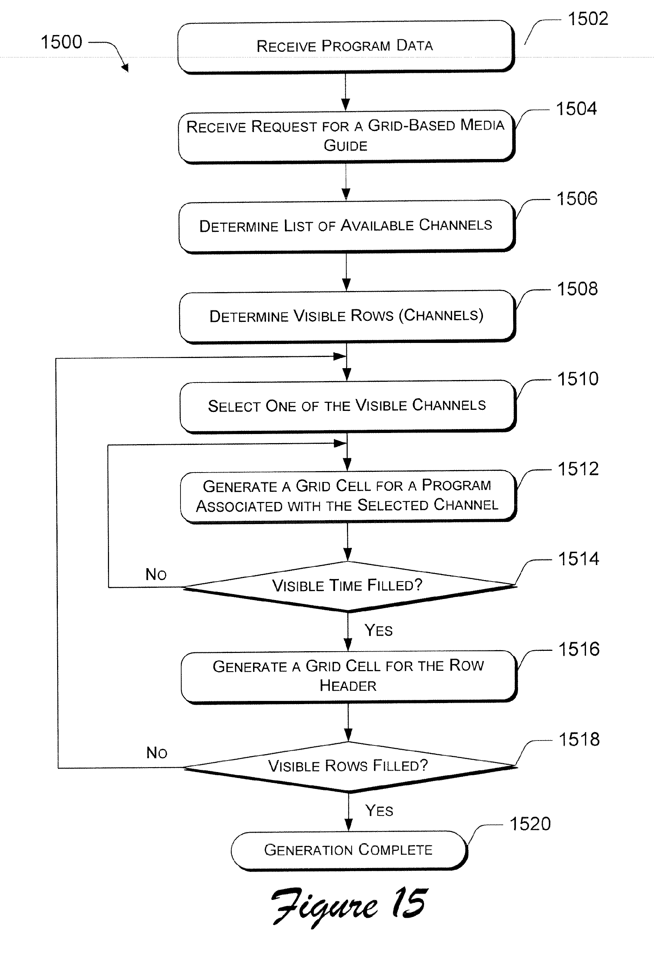

Figure 15 illustrates a process 1500 for generating a grid-based data-driven media guide. The process is illustrated as a set of operations shown as discrete blocks. The process may be implemented in any suitable hardware, software, firmware, or combination thereof. The order in which the operations are described is not to be construed as a limitation.

Figure 15 illustrates a method for generating a grid-based media guide as may be implemented by grid guide generator 1420. Similar methods may be implemented by channel guide generator 1422, browse bar guide generator 1424, and any other type of guide generator that may be implemented. The guide generators are configured to drive the format of the display, and call methods associated with the MediaChannel objects to determine the specific data to be displayed.

At block 1502, media guide application 1320 receives program data. Program data that may be received may be in any number of formats, and may represent any number of different types of media content. For example, media guide application 1320 may receive program data identifying scheduled broadcast television programs, available on-demand videos, available on-demand games, previously recorded media content, applications associated with purchasing or viewing media content, and so on.

At block 1504, media guide application 1320 receives a request for a grid-based media guide. For example, a user may press a "guide" button on a remote control device, causing client device 1302 to direct media guide application 1320 to generate a grid-based media guide as illustrated in Figure 1, 6, or 10.

At block 1506, media guide application 1320, or more specifically, grid guide generator 1420 determines a list of available channels. For example, grid guide generator 1420 may access EPG data repository 1402 to determine the list of channels for which EPG data is available.

At block 1508, grid guide generator 1420 determines which rows, each of which corresponds to a channel, will be visible on the screen when the media guide is displayed. For example, in an exemplary implementation, the channel to which the client device is currently tuned may be displayed as the first row, and the media guide may display a total of six rows. Accordingly, the specific six channels that will be represented are identified. The rows (e.g., channels) that are displayed may be modified, for example, by a user pressing an up or down arrow button on a remote control to scroll through the available guide data.

At block 1510, grid guide generator 1420 selects one of the channels that will be visible. For example, grid guide generator 1420 identifies a MediaChannel object that is associated with one of the channels that will be visible when the media guide is displayed. In an exemplary implementation, grid guide generator 1420 applies rules to determine which type of MediaChannel object to associate with each type channel that is identified in the received EPG data. For example, the EPG data that is received may include a type identifier that corresponds to a particular type of MediaChannel class.

At block 1512, grid guide generator 1420 generates a grid cell for a program associated with the selected channel. For example, grid guide generator 1420 calls the GetGridCell method associated with the currently selected MediaChannel object. As described above in Table 1 and with reference to Figure 6, the GetGridCell method of a MediaChannel object returns a user interface component (e.g., a grid cell) that represents a particular media item (e.g., a program) that is available over the selected channel. The size of the grid cell that is returned depends on the type of media item represented by the grid cell. For example, if the currently selected channel is a VOD channel over which a single VOD program is available, the grid cell returned by the call to the GetGridCell method will be large enough to fill the portion of the row that will be visible. On the other hand, for example, if the currently selected channel is a broadcast television channel, the grid cell returned by the call to the GetGridCell method may represent a 30 minute television program, and may not be large enough to fill the entire portion of the row that will be visible.

At block 1514, grid guide generator 1420 determines whether or not the returned grid cell(s) are large enough to fill the portion of the row that will be visible. If the returned grid cell(s) are not large enough to fill the row (the "No" branch from block 1514), then processing continues as described above with reference to block 1512, and another call to the GetGridCell method is made to generate another grid cell associated with the selected channel.

If the returned grid cell(s) are large enough to fill the row (the "Yes" branch from block 1514), then at block 1516, grid guide generator 1420 generates a grid cell for the row header. For example, grid guide generator 1420 calls the GetMediaItemForChannel method associated with the current MediaChannel object to generate a grid cell that will represent the channel as a row header. Row headers for different types of MediaChannel objects are illustrated and described above with reference to Figure 6.

At block 1518, grid guide generator 1420 determines whether or not all of the rows that will be visible are filled with grid cells. If all of the visible rows are filled (the "Yes" branch from block 1518), then at block 1520, generation of the grid-based media guide is complete.

If all of the visible rows are not yet filled (the "No" branch from block 1518), then processing continues as described above with reference to block 1510 at which a MediaChannel object associated with another of the channels that will be visible is selected.

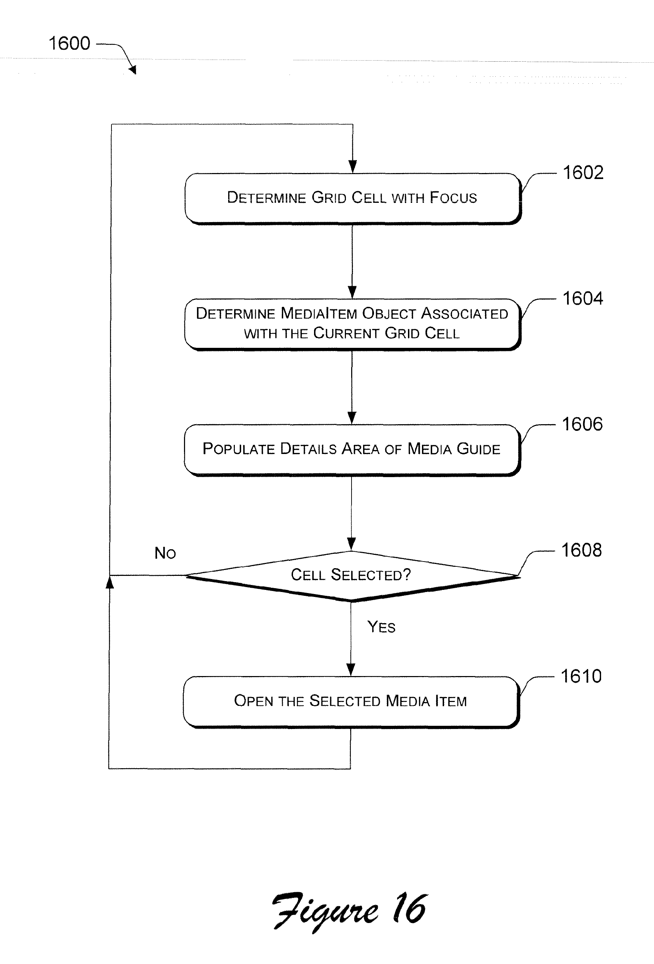

Figure 16 illustrates a process for managing viewer interaction with a grid-based data-driven media guide. The process is illustrated as a set of operations shown as discrete blocks. The process may be implemented in any suitable hardware, software, firmware, or combination thereof The order in which the operations are described is not to be construed as a limitation.

Figure 16 illustrates a method for managing viewer interaction with a grid-based media guide as may be implemented by grid guide generator 1420. Similar methods may be implemented by channel guide generator 1422, browse bar guide generator 1424, and any other type of guide generator that may be implemented.

At block 1602, grid guide generator 1420 determines which grid cell currently has the focus. For example, when the media guide is first generated, the grid cell that is a representation of the program to which the client device is currently tuned may be given the focus. The focus may change when a viewer enters a guide navigation command, for example, by pressing an arrow button on a remote control.

At block 1604, grid guide generator 1420 determines a MediaItem object that is associated with the current grid cell. When a grid cell is generated (as described above with reference to block 1512), a MediaItem object is associated with the grid cell. This is illustrated and described above with reference to Figure 10.

At block 1606, grid guide generator 1420 populates a details area of the media guide. For example, referring to Figure 1, the section below the grid, titled "Program Details" is populated. In the described implementation, grid guide generator 1420 calls the ShowRolloverInfo method associated with the current MediaItem object. As described above with reference to Table 2 and Figure 10, the ShowRolloverInfo method sets the rollover information display in the details area of the screen. In an exemplary implementation, the ShowRolloverInfo method may return a user interface object (similar to a grid cell) that includes metadata that is already formatted for display.

At block 1608, grid guide generator 1420 determines whether the current cell has been selected by the user. For clarification, the current cell is the grid cell that currently has the focus; a selected cell is a grid cell that has the focus and is then actively selected by the user, for example by the pressing of an "OK" button on a remote control.

If the current cell has not been selected (the "No" branch from block 1608) the processing grid guide generator 1420 continues this process as described above with reference to block 1602.

If the current cell has been selected (the "Yes" branch from block 1608), then at block 1610, grid guide generator 1420 opens the media item associated with the selected grid. For example, grid guide generator 1420 calls the Open method associated with the current MediaItem object. The actions that are performed may differ depending on the type of media item that has been selected. For example, "opening" a currently playing broadcast television program may cause the client device to tune to the channel on which the program is currently being aired. In contrast, "opening" a VOD application may launch a page through which the viewer can purchase a video-on-demand from a catalog of available VODs.

As described above, the media guide application 1320, and each guide generator that is implemented as a component thereof may be unaware of the specific actions that are to be taken when a particular media item is selected. The Open method is used to customize the operations that are performed for different types of media items. In this way, the media guide application 1320 only needs to know that when an item is selected, the Open method is called, rather than needing to determine the type of item that was selected and then determine, based on the item type, what actions are to be performed.

### Conclusion

Although the systems and methods have been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A data structure, comprising:
a media channel interface that defines methods associated with displaying metadata associated with a media channel;
a media channel class that is based on the media channel interface that specifies methods associated with displaying metadata associated with a particular type of media channel; and
a media channel object that is an instantiation of the media channel class and represents a particular media channel.

2. The data structure as recited in claim 1, wherein the media channel interface comprises at least one of an on now method definition for identifying a program that is currently available on a particular media channel, an on next method definition for identifying a program that is scheduled to be available on the particular media channel after the program that is currently available on the particular media channel, an on later method definition for identifying a program that is scheduled to be available on the particular media channel after the program that is identified by the on next method, a get media item for channel method definition for identifying a media item that will be associated with a channel header, a time based method definition for identifying whether or not the particular media channel is associated with time-based media items, a groupable method definition for identifying whether or not the particular media channel may be grouped with one or more other media channels, a group header method definition for identifying a header to be used to represent a group of groupable media channels, a get grid cell method definition for generating a user interface element that represents a particular media item associated with the particular media channel, a get channel guide data method definition for identifying one or more media items to be displayed in association with the particular media channel in a channel-based columnar media guide display, a get channel list item method definition for generating a user-interface element that represents a particular media item in a channel-based columnar media guide display , or an is blocked by parental controls method definition for identifying whether or not the particular media channel is displayable based on parental control settings.

3. The data structure as recited in claim 1, wherein the media channel class comprises at least one of a live TV media channel class for representing a broadcast television channel, a VOD media channel class for representing a channel over which a video-on-demand is available, a DVR application media channel class for representing a channel over which media content managed by a digital video recorder is available, or a VOD application media channel class for representing a channel over which an application through which video-on-demand may be purchased is available.

4. The data structure as recited in claim 1, further comprising:
a media item interface that defines methods associated with responding to selection of a particular media item;
a media item class that is based on the media item interface that specifies methods associated with responding to selection of a particular type of media item; and
a media item object that is an instantiation of the media item class and represents a particular media item.

5. The data structure as recited in claim 4, wherein the media item interface comprises at least one of an open method definition for defining actions to be performed when a user requests a particular media item be opened, a more information method definition for defining actions to be performed when a user request more information in association with a particular media item, a record method definition for defining actions to be performed when a user requests that a particular media item be recorded, a show rollover information method definition for defining actions be performed when a particular media item is given the focus within a media guide display, or a show channel bar information method definition for defining actions to be performed when a particular media item is accessed through a channel change command.

6. The data structure as recited in claim 4, wherein the media item class comprises at least one of a VOD purchases media item class for representing actions to be performed upon selection of a representation of an application through which previously purchased on-demand media content may be accessed, a DVR application media item class for representing actions to be performed upon selection of a representation of a DVR application, a DVR application channel media item class for representing actions to be performed upon selection of a representation of a channel via which a DVR application is available, a channel media item class for representing actions to be performed upon selection of a representation of a particular channel, a VOD media item class for representing actions to be performed upon selection of a representation of a particular video-on-demand, a VOD channel media item class for representing actions to be performed upon selection of a representation of a particular VOD channel, a DVR media item class for representing actions to be performed upon selection of a representation of a media item that is managed by a DVR, a VOD application media item class for representing actions to be performed upon selection of a representation of a VOD application, a VOD application channel media item class for representing actions to be performed upon selection of a representation of channel via which a VOD application is available, or a live television media item class for representing actions to be performed upon selection of a representation of a broadcast television program.

7. The data structure as recited in claim 4, wherein the selection of a particular media item comprises at least one of determining that a particular media item object has focus, determining that an open command has been received while a particular media item object has the focus, determining that a more info command has been received while a particular media item object has the focus, or determining that a record command has been received while a particular media item object has the focus.

8. The data structure as recited in claim 4, wherein the media item object is associated with a media channel object.

9. A method, comprising:
identifying a media channel to be represented in an electronic media guide;
identifying a media channel object that is a representation of the media channel;
identifying a media item object that is associated with the media channel object;
generating a visual representation of the media item object; and
rendering an electronic media guide that includes the visual representation of the media item object.

10. The method as recited in claim 9, wherein the generating a visual representation of the media item object comprises calling a GetGridCell method associated with the media channel object.

11. The method as recited in claim 9, wherein the visual representation of the media item object comprises a row header that indicates a channel number associated with the media channel.

12. The method as recited in claim 9, wherein the visual representation of the media item object comprises a grid cell that indicates the name of a media item that is available via the media channel.

13. The method as recited in claim 12, wherein the media item comprises at least one of a broadcast television program, a previously purchased video-on-demand, a software application, an interface through which an on-demand video may be purchased, previously recorded media content, or an interface through which media content may be scheduled to be recorded.

14. The method as recited in claim 9, wherein the electronic media guide comprises a grid arranged vertically by channel and horizontally by time.

15. The method as recited in claim 9, wherein the electronic media guide comprises a plurality of columns, where each column is representative of a channel.

16. The method as recited in claim 9, wherein the electronic media guide comprises a browse bar configured to be displayed simultaneously with a currently playing media content.

17. The method as recited in claim 9, wherein the media channel comprises at least one of a television channel over which broadcast television programs may be viewed, a media-on-demand channel over which on-demand media content may be accessed, a DVR application channel over which an application associated with a digital video recorder may be accessed, or a VOD application channel over which an application associated with on-demand media content may be accessed.

18. The method as recited in claim 17, wherein the on-demand media content comprises at least one of video, audio, or a game application.

19. The method as recited in claim 17, wherein the application associated with a digital video recorder comprises at least one of an application through which media can be scheduled for recording, or an application through which previously recorded media content can be accessed.

20. The method as recited in claim 17, wherein the application associated with on-demand media content comprises at least one of an application through which on-demand media content can be purchased, or an application through which previously purchased on-demand media content can be accessed.

21. A system, comprising:
a processor;
a memory; and
an media guide application stored in the memory and executed on the processor configured to
receive channel data associated with a plurality of channels, wherein a particular one of the plurality of channels comprises at least one of a broadcast television channel, a video-on-demand channel, a DVR application channel, or a VOD application channel;
receive media content data associated with a plurality of media items that are available via the plurality of channels, wherein a particular one of the plurality of media items comprises at least one of a broadcast television program, an available video-on-demand, a previously purchased video-on-demand, an available on-demand video game, a previously recorded program, a digital video recorder application, or a VOD purchasing application; and
generate an interactive media guide that displays representations of the plurality of channels and representations of the plurality of media items, wherein the representations are generated dynamically based on attributes associated with each of the plurality of channels and interactivity is based on attributes associated with each of the plurality of media items.

22. The system as recited in claim 21, wherein the media guide application comprises a media channel class for determining how to render various representations of a particular channel.

23. The system as recited in claim 22, wherein the media channel class comprises at least one of a live television media channel class for determining how to render a representation of a broadcast television channel, a VOD media channel class for determining how to render a representation of a video-on-demand channel, a DVR application media channel class for determining how to render a representation of a DVR application channel, or a VOD application media channel class for determining how to render a representation of a VOD application channel.

24. The system as recited in claim 21, wherein the media guide application comprises a media item class for determining how to respond to selection of a representation of a particular media item.

25. The system as recited in claim 24, wherein the media item class comprises at least one of a VOD purchases media item class for determining how to respond to selection of a representation of a VOD purchasing application, a DVR application media item class for determining how to respond to selection of a representation of a digital video recorder application, a VOD media item class for determining how to respond to selection of a representation of a video-on-demand, a DVR media item class for determining how to respond to selection of a representation of a previously recorded program, a live television media item class for determining how to respond to selection of a representation of a broadcast television program, or a VOD application media item class for determining how to respond to selection of a representation of a VOD application.

26. The system as recited in claim 21, wherein the media guide application is further configured to generate at least one of a time-based grid media guide, a channel-based columnar media guide, or a browse bar media guide that can be displayed concurrently with media content.

27. The system as recited in claim 21 embodied as a media entertainment system set-top box.

28. A system, comprising:
a media channel class that represents a particular type of media channel;
a media item class that represents a particular type of media item;
a media channel object that comprises an instantiation of the media channel class and represents a particular media channel;
a media item object that comprises an instantiation of the media item class and represents a particular media item that is associated with the particular media channel;
a guide generator configured to generate an interactive media guide that presents a visual representation of the particular media item in association with the particular media channel.

29. The system as recited in claim 28, wherein media items of different types may be associated with a single media channel.

30. The system as recited in claim 28, wherein the interactive media guide may simultaneously present visual representations of different types of media items associated with a particular media channel.

31. The system as recited in claim 28, wherein the interactive media guide may simultaneously present visual representations of different types of media channels.

32. The system as recited in claim 28, wherein the media channel class is based on a media channel interface that defines methods associated with generating a display of metadata associated with a media channel.

33. The system as recited in claim 28, wherein the media item class is based on a media item interface that defines methods associated with responding to selection of a representation of a media item.

34. The system as recited in claim 28, wherein the guide generator comprises a grid guide generator configured to generate a time-based grid media guide.

35. The system as recited in claim 28, wherein the guide generator comprises a channel guide generator configured to generate a channel-based columnar media guide.

36. The system as recited in claim 28, wherein the guide generator comprises a browse bar guide generator configured to generate a browse bar media guide that is designed to be displayed simultaneously with currently playing media content.

37. The system as recited in claim 28, further comprising a data repository configured to maintain metadata associated with media items and media channels.

38. One or more computer-readable media comprising computer-executable instructions that, when executed, direct a computing system to:
receive data that identifies available media channels and media items that are associated with the media channels;
for each of the media channels, instantiate a channel-type-specific media channel object;
for each of the media items, instantiate a media item-type-specific media item object; and
dynamically generate an interactive media guide based on one or more of the media channel objects, wherein the interactive media guide presents a visual representation of one or more of the media item objects.

39. The one or more computer-readable media as recited in claim 38, further comprising computer-readable media comprising computer-executable instructions that, when executed, direct a computing system to:
receive an indication that a particular one of the media item objects has been selected; and
respond to the selection of the particular one of the media item objects by calling a method associated with the particular one of the media item objects.
